**Europäisches Patentamt**

**European Patent Office**

**Office européen des brevets**

(19)

(11) Veröffentlichungsnummer: **0 160 714 B1**

(12) **EUROPÄISCHE PATENTSCHRIFT**

(45) Veröffentlichungstag der Patentschrift:
**07.12.88**

(51) Int. Cl.⁴: **G 11 B 5/592**, G 11 B 5/53

(21) Anmeldenummer: **84105001.6**

(22) Anmeldetag: **03.05.84**

(54) **Einrichtung für die Spurnachführung von rotierenden Magnetköpfen.**

(43) Veröffentlichungstag der Anmeldung:
**13.11.85 Patentblatt 85/46**

(45) Bekanntmachung des Hinweises auf die Patenterteilung:
**07.12.88 Patentblatt 88/49**

(84) Benannte Vertragsstaaten:
**AT BE CH DE FR GB IT LI**

(56) Entgegenhaltungen:
**DE-A- 2 741 217**
**FR-A- 2 414 840**
**GB-A- 2 113 450**
**JP-A-59 019 225**
**US-A- 4 295 172**
**US-A- 4 326 228**

**PATENTS ABSTRACTS OF JAPAN, Band 4, Nr. 110**
**(P-22)[592], 8. August 1980, Seite 29 P 22; & JP - A - 55**
**67 938 (MATSUSHITA DENKI SANGYO K.K.) 22.05.1980**
**PATENTS ABSTRACTS OF JAPAN, Band 8, Nr. 18**
**(P-250)[1455], 26. Januar 1984; & JP - A - 58 175 131**
**(SANYO DENKI K.K.) 14.10.1983**
**PATENTS ABSTRACTS OF JAPAN, Band 6, Nr. 82**
**(P-116)[960], 20. Mai 1982; & JP - A - 57 18 019**
**(MATSUSHITA DENKI SANGYO K.K.) 29.01.1982**

(73) Patentinhaber: **GRUNDIG E.M.V. Elektro-Mechanische Versuchsanstalt Max Grundig holländ. Stiftung & Co. KG., Kurgartenstrasse 37, D-8510 Fürth/Bay. (DE)**

(72) Erfinder: **Köpnick, Klaus–Jürgen, Köningsberger Strasse 42, D-8510 Fürth/Bay (DE)**

(74) Vertreter: **Kolb, Max, Kurgartenstrasse 37, D-8510 Fuerth/Bayern (DE)**

(56) Entgegenhaltungen: (Fortsetzung)
**PATENTS ABSTRACTS OF JAPAN, Band 4, Nr. 70**
**(P-12)[552], 23. Mai 1980, Seite 150 P 12; & JP - A - 55 38**
**626 (MATSUSHITA DENKI SANGYO K.K.) 18.03.1980**
**PATENTS ABSTRACTS OF JAPAN, Band 7, Nr. 152**
**(P-208)[1297], 5. Juli 1983; & JP - A - 58 62 822**
**(MATSUSHITA DENKI SANGYO K.K.) 14.04.1983**

ACTORUM AG

## Beschreibung

Die Erfindung betrifft eine Einrichtung für die Spurnachführung von rotierenden Magnetköpfen in Magnetbandgeräten mit den im Oberbegriff des Anspruchs 1 angegebenen Merkmalen. Eine derartige Einrichtung ist aus der JP-A-55-67938 bekannt.

Seit einiger Zeit werden beispielsweise in Videorecordern zur Spurnachführung Piezoelemente (in diesem Zusammenhang auch «Aktuatoren» oder «Bimorphe» genannt) verwendet, an deren freischwingenden Enden die Magnetköpfe befestigt sind. Die Piezoelemente weisen die Eigenschaft auf, daß sie beim Anlegen einer Spannung je nach Polarität in die eine oder andere Richtung ausgelenkt werden, so daß die Magnetköpfe senkrecht zur Abtastrichtung bewegt werden können. Steuert man die Piezoelemente mit einer Regelspannung entsprechend dem Spurfehler an, so folgen die Videoköpfe genau den vorgesehenen Spuren.

An ihren anderen Enden sind die Piezoelemente fest in einen Piezoelementhalter eingespannt, der entweder selbst rotiert oder starr mit dem rotierenden Kopfrad des Videorecorders verbunden ist. Die freischwingende Länge des Piezoelementes ist ein Maß für die erreichbare Kopfauslenkung.

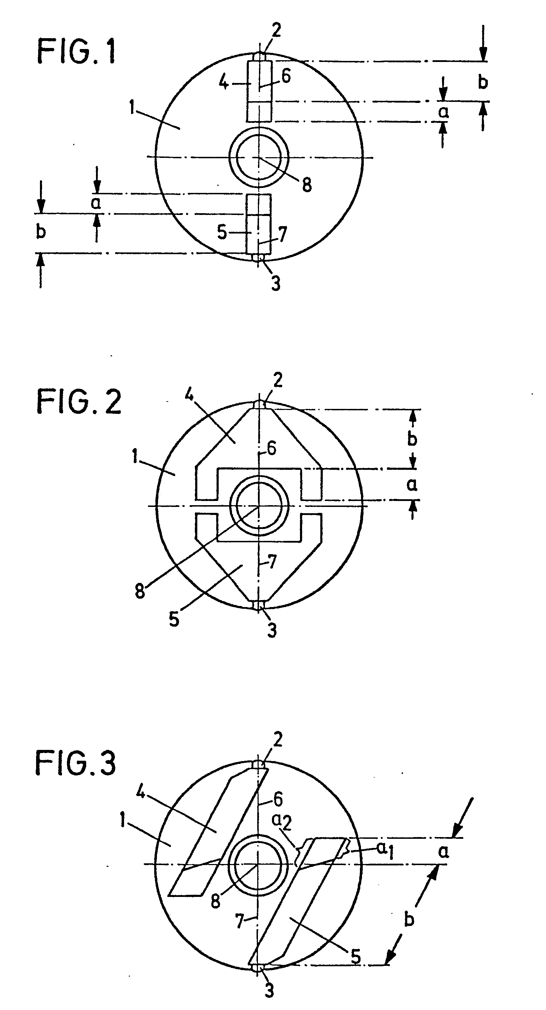

Die Figuren 1 und 2 zeigen bekannte Anordnungen zur Spurnachführung in Videorecordern. Die Magnetköpfe 2 und 3 sind an den freischwingenden Enden der Piezoelemente 4 und 5 befestigt (z.B. aufgeklebt). Die freischwingenden Längen der Piezoelemente sind mit b bezeichnet. An ihren anderen Enden sind die Piezoelemente in einen Piezoelementhalter 1 eingespannt, der entweder selbst als rotierendes Teil ausgebildet oder mit dem rotierenden Kopfrad des Videorecorders starr verbunden ist. Die Einspannlänge der Piezoelemente in die Piezoelementhalter ist mit a bezeichnet.

Neuere Trends in der Videotechnik führen zu immer kleineren Kopfrädern, was zur Folge hat, daß die freischwingenden Längen der Piezoelemente und damit auch die erreichbare Kopfauslenkung immer kleiner wird.

Der vorliegenden Erfindung liegt deshalb die Aufgabe zugrunde, eine Einrichtung zur Erhöhung der Piezoelementauslenkung zu schaffen, die sich insbesondere für kleine Magnetbandgeräte eignet, billig ist und eine praktisch azimutfehlerfreie Wiedergabe der magnetisch aufgezeichneten Signale ermöglicht.

Diese Aufgabe wird bei einer Einrichtung der im Oberbegriff des Anspruchs 1 angegebenen Art durch die im kennzeichnenden Teil des Anspruchs 1 angegebenen Merkmale gelöst.

Die Vorteile der Erfindung liegen darin, daß insbesondere bei Magnetbandgeräten mit kleinen Kopfrädern die freischwingenden Längen der Piezoelemente und damit die erreichbare Auslenkung vergrößert wird.

Im folgenden wird ein Ausführungsbeispiel für die vorliegende Erfindung mit Hilfe der Figur 3 näher erläutert. Die Magnetköpfe 2 und 3 sind an den freischwingenden Enden der Piezoelemente 4 und 5 befestigt. Die freischwingenden Längen der Piezoelemente sind mit b bezeichnet.

Durch die Anordnung der Piezoelemente 4, 5 schräg zur Verbindungslinie 6, 7 zwischen zugeordnetem Magnetkopf 2, 3 und Drehpunkt 8 der rotierenden Halterung 1 bis etwa in Höhe dieses Drehpunktes wird die freischwingende Länge jedes Piezoelementes vergrößert. An ihren anderen Enden sind die Piezoelemente in den Piezoelementhalter 1 eingespannt. Diese Einspannung erfolgt im Gegensatz zum Stand der Technik schräg, um die sonst bei der Auslenkung der Piezoelemente zu erwartenden Azimutfehler der Magnetköpfe zu kompensieren. Damit wird eine praktisch azimutfehlerfreie Wiedergabe der magnetisch aufgezeichneten Signale ermöglicht. Die Einspannlänge, unter der hier der Mittelwert der Strecken $a_1$ und $a_2$ verstanden wird, ist mit a bezeichnet.

Mit einer Anordnung nach der vorliegenden Erfindung wird erreicht, daß im Vergleich zum Stand der Technik bei sonst gleichen Bedingungen (insbesondere bei gleicher Regelspannung) die erreichbare Auslenkung der Piezoelemente vergrößert wird.

Die Erfindung ist nicht auf das vorliegende Ausführungsbeispiel beschränkt. Beispielsweise spielt es keine Rolle, welcher Art die Verbindungen zwischen Magnetkopf und Piezoelement sowie Piezoelement und Piezoelementhalter sind.

## Patentansprüche

1. Einrichtung für die Spurnachführung von rotierenden Magnetköpfen (2, 3) in Magnetbandgeräten, bei der als Träger der Magnetköpfe Piezoelemente (4, 5) verwendet sind, die an einem Ende fest in einer rotierenden Halterung eingespannt und an ihrem auslenkbaren Ende mit dem Magnetkopf verbunden sind, wobei zur Erhöhung der Auslenkung die freie Länge (b) der Piezoelemente (4, 5) schräg zur Verbindungslinie zwischen zugeordnetem Magnetkopf und Drehpunkt der rotierenden Halterung verläuft, dadurch gekennzeichnet, daß die freie Länge (b) der Piezoelemente (4, 5) bis etwa in die Höhe des Drehpunktes verläuft und daß zur Kompensation von Azimutfehlern die Piezoelemente (4, 5) derart schräg in die rotierende Halterung (1) eingespannt sind, daß die Einspannlängen ($a_1$, $a_2$) an den Kanten des jeweiligen Piezoelements unterschiedlich groß sind.

2. Einrichtung nach Anspruch 1 dadurch gekennzeichnet, daß die rotierende Halterung der Piezoelemente fest mit einem rotierenden Kopfrad (1) verbunden ist.

## Claims

1. Device for the track following of rotating magnetic heads (2, 3) in magnetic tape devices, in which piezoelectric elements (4, 5) are used as carriers of the magnetic heads, are clamped at one end firmly in a rotating holder and are connected at their deflectable end to the magnetic head, the free length (b) of the piezoelectric elements (4, 5) running at an angle to the joining line between assigned magnetic head and point of rotation of the rotating holder, to increase the deflection, characterized in that the free length (b) of the piezoelectric elements (4, 5) extends up to approximately level with the point of rotation and in that, to compensate for azimut errors, the piezoelectric elements (4, 5) are clamped into the rotating holder (1) at such an angle that the clamping lengths (a₁, a₂) at the edges of the respective piezoelectric element are of different sizes.

2. Device according to Claim 1, characterized in that the rotating holder of the piezoelectric elements is firmly connected to a rotating head wheel (1).

**Revendications**

1. Dispositif permettant aux têtes magnétiques (2, 3) rotatives d'appareils à bande magnétique de suivre les pistes, dans lequel on utilise comme support des têtes magnétiques des éléments piézo-électriques (4, 5) qui sont fixés à une extrémité dans un support tournant et assemblés à la tête magnétique à leur extrémité pouvant dévier, la longueur b libre des éléments piézo-électriques (4, 5) étant oblique par rapport à ligne la reliant la tête magnétique correspondante et le point de rotation du support tournant, pour accroître la déviation, caractérisé en ce que la longueur libre (b) des éléments piézo-électriques (4, 5) s'étend jusq'à hauteur à peu près du point de rotation, en ce que pour compenser les erreurs d'azimut, les éléments piézo-électriques (4, 5) sont fixés obliquement dans le support (1) tournant, en ce que les longueurs de fixation (a₁, a₂) sont diffé-rentes sur les bords de chaque élément piézo-électrique.

2. Dispositif selon la revendication 1, caractérisé en ce que le support tournant des éleménts piézo-électriques est solidaire d'une roue de tête (1) tour-nante.

FIG.1

FIG.2

FIG.3